# EUROPEAN PATENT SPECIFICATION

(11) **EP 4 207 610 B1**
(45) Date of publication and mention of the grant of the patent: **24.06.2026**
(21) Application number: 21874296.3
(22) Date of filing: 22.09.2021
(51) Int. Cl.: H04B 1/40

(54) **SIGNAL PROCESSING CIRCUIT AND RELATED APPARATUS**
SIGNALVERARBEITUNGSSCHALTUNG UND ZUGEHÖRIGE VORRICHTUNG
CIRCUIT DE TRAITEMENT DE SIGNAUX ET APPAREIL ASSOCIÉ

(30) Priority: 30.09.2020 CN 202011065863
(43) Date of publication of application: 05.07.2023
(73) Proprietor: Huawei Technologies Co., Ltd., Shenzhen, Guangdong 518129 (CN)
(72) Inventor: ZHANG, Weiwei, Shenzhen, Guangdong 518129 (CN); LI, Xu, Shenzhen, Guangdong 518129 (CN); LV, Yibo, Shenzhen, Guangdong 518129 (CN); WANG, Tianxiang, Shenzhen, Guangdong 518129 (CN)
(74) Representative: Isarpatent
(86) International application number: PCT/CN2021/119501
(87) International publication number: WO 2022/068635

(56) References cited:
- CN-A- 102 624 346
- CN-A- 103 281 278
- CN-A- 103 312 304
- CN-A- 103 532 557
- CN-A- 103 813 591
- CN-A- 107 637 036
- US-A1- 2016 065 139
- HU MAOHAI, YE JIANG-FENG,YAN JUN,JIANG HONG-YU,ZHANG WEI: "A real-time PAPR reduction algorithm based on FPGA", XINXI YU DIANZI GONGCHENG = INFORMATION AND ELECTRONIC ENGINEERING, ZHONGGUO GONGCHENG WULI YANJIUYUAN, CHINA, vol. 8, no. 5, 31 October 2010 (2010-10-31), CHINA , XP055920502, ISSN: 1672-2892

## Description

### TECHNICAL FIELD

This disclosure generally relates to the field of circuit technologies.

The invention in particular relates to a radio frequency transmitting circuit, a radio frequency receiving circuit, a communication apparatus including such a radio frequency transmitting circuit or radio frequency receiving circuit, as well as a communication system comprising such a communication apparatus.

### BACKGROUND

A next-generation mobile communication system (for example, a fifth-generation (5G) communication system) imposes a higher requirement on a data transmission rate. To utilize spectrum resources efficiently, an orthogonal frequency division multiplexing (OFDM) technology for multi-carrier transmission may be used to implement parallel transmission of high-speed serial data. The OFDM technology supports multi-user access and has a strong anti-multipath capability. An OFDM signal is formed by superposing a plurality of sub-carriers. Therefore, when phases of the sub-carriers at a moment are the same or similar, a large peak power is caused, resulting in a high peak-to-average power ratio (PAPR).

The high peak-to-average power ratio brings many problems to a communication system. An analog-to-digital converter (ADC) is used as an example. In a scenario having a relatively high peak-to-average power ratio, a higher requirement is imposed on the ADC. When a signal exceeds an input amplitude range of the analog-to-digital converter ADC, the ADC works in a saturated state, resulting in inaccurate quantization precision.

CN 103 532 557 A relates to an all-parallel analog-digital converter of VCO (voltage-controlled oscillator)-based comparators. The all-parallel analog-digital converter comprises a sampling circuit, a resistor voltage dividing circuit, the VCO-based comparators, triggers D and a priority encoder, wherein an input voltage signal is input into the sampling circuit, and then the sampling circuit transmits the input voltage signal into the input positive terminal of each VCO-based comparator; the reference voltage of a reference voltage signal, which is divided by the resistor of the resistor voltage dividing circuit, is connected to the input negative terminal of a corresponding VCO-based comparator; the output of each VCO-based comparator is connected to the data input end of each trigger D; the output end of each trigger D is then connected to the priority encoder; the output is output after being encoded.

Therefore, the object of the present invention is to provide a radio frequency transmitting circuit, a radio frequency receiving circuit, a communication apparatus including such a radio frequency transmitting circuit or radio frequency receiving circuit, as well as a communication system comprising such a communication apparatus to reduce a high peak-to-average power ratio of a modulation signal. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

### SUMMARY

According to a first aspect according to the invention, the radio frequency transmitting circuit according to the invention includes a signal processing circuit, including: an input port, a reference circuit, a decoding circuit, an operation circuit, and an output port, where both an input signal of the input port and an output signal of the output port are analog signals.

The reference circuit is configured to generate a plurality of reference voltages.

The decoding circuit is configured to output a first control level based on the plurality of reference voltages and the input signal, where the first control level is used to control on/off of the operation circuit.

The operation circuit is configured to generate the output signal based on the first control level, a first reference voltage, and the input signal, where the output signal is equal to the input signal minus the first reference voltage plus a benchmark reference voltage, the plurality of reference voltages include the first reference voltage and the benchmark reference voltage, and the first reference voltage is not greater than the input signal.

Specifically, the output signal is equal to the input signal minus the first reference voltage plus the benchmark reference voltage. A lower limit of a signal interval to which the input signal belongs is the first reference voltage, an upper limit of the signal interval to which the input signal belongs is a second reference voltage, the first reference voltage is one reference voltage of the plurality of reference voltages, and the second reference voltage is another reference voltage of the plurality of reference voltages.

According to the invention, the output signal may be obtained by subtracting the first reference voltage from the input signal and adding the benchmark reference voltage to an obtained difference.

In another possible but not claimed implementation, the output signal may be obtained by subtracting the benchmark reference voltage from the first reference voltage to obtain a difference, and then subtracting the difference from the input signal.

According the invention, an input signal is processed by using the signal processing circuit. When the input signal features in a high peak-to-average power ratio, the signal processing circuit folds the input signal to a specific range, and generates an output signal. According to processing of the signal processing circuit provided in accordance with the invention, an impact of circuit nonlinearity is reduced, so that transmission performance of the entire circuit is improved. Because the signal processing circuit directly implements signal folding in an analog domain, a requirement for an analog-to-digital converter (ADC) can be greatly lowered, or an amplifier is enabled to work in an efficient region.

With reference to the first aspect, in a possible implementation of the first aspect, the decoding circuit includes n parallel comparators, where n is a positive integer greater than 1, and the n comparators are connected to the reference circuit and receive n reference voltages output by the reference circuit and the input signal.

In an optional implementation, in the n comparators, when the input signal is greater than reference voltages received by k comparators in the n comparators, the k comparators output first levels, and the remaining n-k comparators output second levels, where the first levels are different from the second levels, and k is a positive integer less than or equal to n.

The decoding circuit is configured to output the first control level based on the k first levels and the n-k second levels that are output by the n comparators.

In this embodiment of this application, the signal processing circuit uses a parallel architecture, that is, the decoding circuit includes n comparators. Due to the plurality of parallel comparators, a speed of determining the signal interval to which the input signal belongs is increased, and a running speed and efficiency of the circuit are improved.

With reference to the first aspect, in a possible implementation of the first aspect, the decoding circuit outputs one first control level and n-1 second control levels based on the first levels and the second levels, where the first control level is different from the second control levels.

With reference to the first aspect, in a possible implementation of the first aspect, the operation circuit further includes n parallel subtractor groups, each subtractor group includes at least one subtractor, the n subtractor groups are connected to the reference circuit and receive the n reference voltages output by the reference circuit and the input signal, and the reference voltages received by the n subtractors are in a one-to-one correspondence with the reference voltages received by the n comparators.

In this embodiment of this application, the signal processing circuit uses a parallel architecture, that is, the operation circuit includes n subtractor groups. Due to the plurality of parallel subtractor groups, a speed of processing the input signal is increased, and a running speed and efficiency of the circuit are improved.

With reference to the first aspect, in a possible implementation of the first aspect, each subtractor group includes one first subtractor; and the operation circuit further includes n switches, where the n switches are respectively connected to n first subtractors in the n subtractor groups.

Specifically, when each subtractor group includes one first subtractor, the n subtractors are configured to receive n reference voltages. The first subtractor is further configured to receive the input signal. The first subtractor is further configured to perform a subtraction operation between the input signal and the received reference voltage. The first subtractor corresponding to the first comparator performs a subtraction operation between the input signal and the first reference voltage, where the reference voltage received by the first subtractor is the first reference voltage.

The n switches are configured, although not claimed as such, to receive the one first control level and the n-1 second control levels that are output by the decoding circuit. The switches are further configured, although not claimed as such, to close based on the first control level or open based on the second control levels. When a first switch receives the first control level, the first switch is closed. An output result of the subtractor connected to the first switch is output to an adder via the first switch. An output result of the first subtractor is a difference between the input signal and the first reference voltage. The adder is configured to generate the output signal based on the output result of the first subtractor and a benchmark reference signal.

In this embodiment of this application, each subtractor group includes one subtractor; and processing of the input signal is jointly performed by the subtractor groups, the switches, and the adder. On the premise of implementing folding of the input signal, a quantity of components in the signal processing circuit is decreased, thereby reducing power consumption of the signal processing circuit.

With reference to the first aspect, in a possible implementation of the first aspect, each subtractor group includes one second subtractor and one third subtractor; and the second subtractor is connected to the third subtractor. Specifically, an output port of the second subtractor is connected to an input port of the third subtractor. Optionally, the second subtractor and the third subtractor may use a same type of subtractors; or the second subtractor and the third subtractor may use different types of subtractors. This is not limited herein. In the n subtractor groups, the n second subtractors are connected to the reference circuit; and the reference voltages received by the n second subtractors are in a one-to-one correspondence with the reference voltages received by the n comparators. The operation circuit further includes n switches, where the n switches are respectively connected to the n third subtractors, and the third subtractors are connected to the adder through the switches. Specifically, output ports of the third subtractors are connected to input ports of the switches.

Specifically, although not claimed as such, the n second subtractors are configured to sequentially receive the n reference voltages. Each second subtractor is configured to receive the benchmark reference voltage. The second subtractor is further configured to perform a subtraction operation between the received reference voltage and the benchmark reference voltage, to generate a first intermediate signal. The third subtractor is configured to receive the first intermediate signal. The third subtractor is further configured to receive the input signal. The third subtractor is further configured to perform a subtraction operation between the input signal and the first intermediate signal, to generate a second intermediate signal.

In this embodiment of this application, each subtractor group includes two subtractors, and folding of the input signal is completed by using the subtractor groups, thereby improving implementation flexibility of solutions.

With reference to the first aspect, in a possible implementation of the first aspect, the reference circuit includes n resistors, the n resistors are connected in series, and n is a positive integer greater than 1; one of the reference voltages is output after each resistor; and the input signal belongs to an interval of the plurality of reference voltages.

In an optional implementation, resistance values of the n resistors are equal.

In another optional implementation, resistance values of the n resistors are unequal. For example, the resistance values of the n resistors are arranged in an arithmetic progression, for example, 1 ohm, 2 ohm, 3 ohm, ..., 5 ohm, 6 ohm, and the like. Optionally, although not claimed as such, the resistance values of the n resistors are adjustable.

Specifically, although not claimed as such, the resistor in the reference circuit may be implemented by using a polycrystalline silicon strip; and the resistance value of the resistor can be controlled precisely by controlling a length-width ratio of the polycrystalline silicon strip. In addition, the resistor may alternatively be implemented by using a metal-oxide-semiconductor (metal-oxide-semiconductor, MOS) field-effect transistor; and a required resistance value is implemented by controlling potentials of three ports of the MOS field-effect transistor.

In this not claimed embodiment of this application, there are a plurality of optional implementation solutions for the resistor in the reference circuit, thereby improving implementation flexibility of solutions.

The radio frequency transmitting circuit according to the invention includes the signal processing circuit according to the first aspect or any implementation of the first aspect, an up-conversion circuit, an amplifier, and an antenna.

The up-conversion circuit is configured to output a modulation signal.

The signal processing circuit is configured to fold the modulation signal, to generate a folded signal.

The amplifier is configured to amplify the folded signal, to generate a transmission signal.

The antenna is configured to send the transmission signal.

According to a third aspect of the invention, the invention also provides a radio frequency receiving circuit. The radio frequency receiving circuit includes the signal processing circuit according to the first aspect or any implementation of the first aspect, a down-conversion circuit, an analog-to-digital converter, and an antenna.

The antenna is configured to receive a radio frequency signal.

The down-conversion circuit is configured to perform down-conversion processing on the radio frequency signal, to generate a baseband signal or an intermediate frequency modulation signal.

The signal processing circuit is configured to fold the baseband signal or the intermediate frequency modulation signal, to generate a folded signal.

The analog-to-digital converter is configured to quantize the folded signal, to obtain a digital signal.

According to a fourth aspect according to the invention, the invention also provides a communication apparatus. The communication apparatus includes the radio frequency transmitting circuit according to the second aspect and/or the radio frequency receiving circuit according to the third aspect.

According to a fifth but not claimed aspect, this disclosure provides a chip system. The chip system includes the radio frequency transmitting circuit according to the second aspect and/or the radio frequency receiving circuit according to the third aspect.

According to a sixth aspect according to the invention, the invention provides a communication system. The communication system includes the communication apparatus according to the fourth aspect.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1a is a schematic diagram of a relationship between output power back-off and efficiency of an amplifier;
FIG. 1b is a schematic diagram of an application scenario according to an embodiment of this application;
FIG. 2 is a schematic diagram of a structure of a communication apparatus according to an embodiment of this application;
FIG. 3 is a schematic diagram of a structure of a radio frequency receiving circuit according to an embodiment of this application;
FIG. 4 is a schematic diagram of a structure of a radio frequency transmitting circuit according to an embodiment of this application;
FIG. 5 is a schematic diagram of an embodiment of a signal processing circuit according to an embodiment of this application;
FIG. 6 is a schematic diagram of an input signal according to an embodiment of this application;
FIG. 7 is a schematic diagram of an output signal according to an embodiment of this application;
FIG. 8 is a schematic diagram of an embodiment of a signal processing circuit according to an embodiment of this application;
FIG. 9 is a schematic diagram of a structure of a processing module according to an embodiment of this application;
FIG. 10 is a possible schematic diagram of a subtractor circuit according to an embodiment of this application;
FIG. 11 is a possible schematic diagram of a switch circuit according to an embodiment of this application;
FIG. 12 is a possible schematic diagram of an adder circuit according to an embodiment of this application;
FIG. 13 is a schematic diagram of a signal processing circuit according to an embodiment of this application;
FIG. 14 is a schematic diagram of comparison between an input signal and an output signal according to an embodiment of this application;
FIG. 15 is a schematic diagram of a circuit structure of a signal processing circuit according to an embodiment of this application;
FIG. 16 is another schematic diagram of comparison between an input signal and an output signal according to an embodiment of this application; and
FIG. 17 is a schematic diagram of another circuit structure of a signal processing circuit according to an embodiment of this application.

### DESCRIPTION OF EMBODIMENTS

Embodiments of this application provide a signal processing circuit and a related apparatus. Both an input signal and an output signal of the signal processing circuit are analog signals. The signal processing circuit folds the input signal before outputting, to modulate a high peak-to-average power ratio.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a differentiation manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The following clearly describes technical solutions in embodiments of this application with reference to the accompanying drawings in embodiments of this application. In descriptions of this application, "/" means "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. In addition, in the descriptions of this application, "at least one item" means one or more items, and "a plurality of items" means two or more items. The term "at least one of the following items (pieces)" or a similar expression refers to any combination of these items, including a single item (piece) or any combination of plural items (pieces). For example, at least one of a, b, or c may indicate: a, b, c, a and b, a and c, b and c, or a, b, and c, where a, b, and c may be singular or plural.

First, the following describes concept related to embodiments of this application: peak-to-average power ratio (peak-to-average power ratio, PAPR). A multiple-input, multiple-output orthogonal frequency-division multiplexing (multiple-input, multiple-output orthogonal frequency-division multiplexing, MIMO-OFDM) system can provide larger coverage, better transmission quality, a higher data rate, and higher spectral efficiency. However, because an OFDM symbol is formed by superposing a plurality of independently modulated sub-carriers, when phases of the sub-carriers are the same or similar, a superposed result is modulated by a same initial phase signal, to generate a relatively large instantaneous power peak, which further brings a relatively high peak-to-average power ratio (peak-to-average power ratio, PAPR for short).

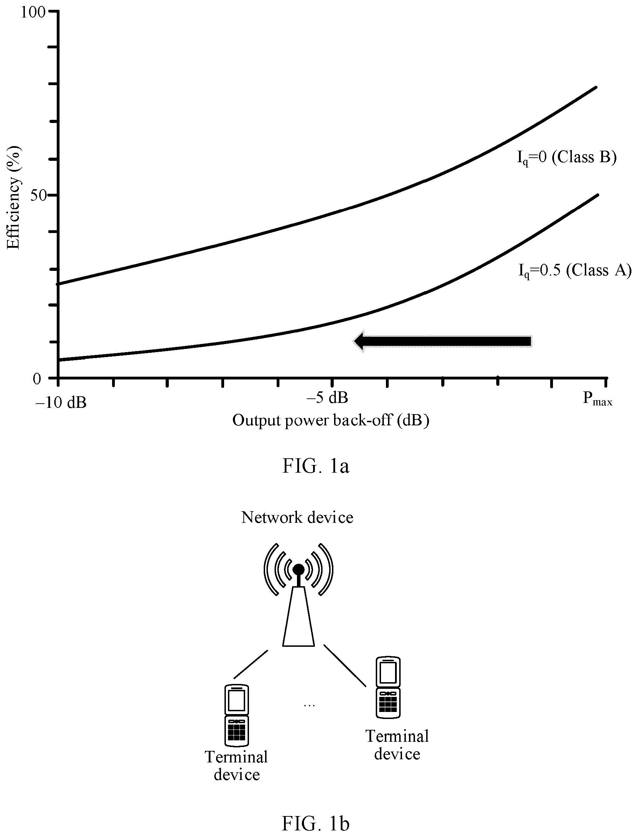

The high peak-to-average power ratio PAPR brings many problems to a communication system. A dynamic range of a common power amplifier is limited. Therefore, when a signal exceeds an input amplitude range of an analog-to-digital converter ADC, the power amplifier works in a saturated state, resulting in inaccurate quantization precision. For the power amplifier PA, to achieve high efficiency, the power amplifier PA generally works at a 1-decibel (dB) compression point. An excessively high peak-to-average power ratio PAPR causes the amplifier to work in a non-linear region, resulting in signal distortion and system performance deterioration. In addition, the excessively high peak-to-average power ratio PAPR greatly reduces efficiency of a signal in a back-off region, as shown in FIG. 1a. FIG. 1a is a schematic diagram of a relationship between output power back-off and efficiency of an amplifier. As a result, efficiency of the amplifier PA is reduced. Further, non-linear distortion of a signal is caused, obvious spectrum spread interference and in-band signal distortion are caused, and performance of an entire system is severely degraded.

Based on this, embodiments of this application provide a signal processing circuit and a related apparatus. Both an input signal and an output signal of the signal processing circuit are analog signals. The signal processing circuit folds the input signal before outputting, to modulate a high peak-to-average power ratio.

FIG. 1b is a schematic diagram of an application scenario according to an embodiment of this application. The signal processing circuit provided in this embodiment of this application may be used in a network device, or may be used in a terminal device. In this embodiment of this application, the terminal device may also be referred to as user equipment (user equipment, UE). As a device having a wireless transceiver function, the terminal device in this embodiment of this application may communicate with one or more core networks (core networks, CNs) by using an access network device in a network device. The terminal device may also be referred to as an access terminal, a terminal, a subscriber unit, a subscriber station, a mobile station, a remote station, a remote terminal, a mobile device, a user terminal, a wireless network device, a user agent, a user apparatus, or the like. The terminal device may be deployed on land, including indoor, outdoor, handheld, or vehicle-mounted deployment; may be deployed on water (for example, on a ship); or may be deployed in air (for example, on aircraft, a balloon, or a satellite). The terminal device may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), a handheld device having a wireless communication function, a computing device or another device connected to a wireless modem, a vehicle-mounted device, a wearable device, an uncrewed aerial vehicle device or a terminal in the internet of things or the internet of vehicles, a terminal in any form in a fifth-generation (fifth-generation, 5G) mobile communication network and a future network, relay user equipment, a terminal in a future evolved public land mobile network (public land mobile network, PLMN), or the like. The relay user equipment may be, for example, a 5G residential gateway (residential gateway, RG). For example, the terminal device may be a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. This is not limited in embodiments of this application.

The network device may be considered as a subnet of an operator network, and is an implementation system between a service node in the operator network and the terminal device. To access the operator network, the terminal device first passes through the network device, and thus may be connected to the service node in the operator network through the network device. The network device in this embodiment of this application is a device that provides a wireless communication function for the terminal device, and may also be referred to as a (radio) access network ((radio) access network, (R)AN). The network device includes but is not limited to: a next generation NodeB (next generation NodeB, gNB) in a 5G system, an evolved NodeB (evolved NodeB, eNB) in long term evolution (Long Term Evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission and reception point (transmission and reception point, TRP), a transmission point (transmission point, TP), a small cell device (pico), a mobile switching center, a network device in a future network, or the like. In systems using different radio access technologies, devices having functions of an access network device may have different names.

The network device and the terminal device in this application may be used in various communication systems, for example, the internet of things (Internet of Things, IoT), the narrowband internet of things (Narrowband Internet of Things, NB-IoT), the long term evolution (Long Term Evolution, LTE), or a fifth-generation (5G) communication system, a hybrid architecture of LTE and 5G, a 5G new radio (new radio, NR) system, and a new communication system emerging in future communication development. The 5G communication system in this application may include at least one of a non-standalone (non-standalone, NSA) 5G communication system and a standalone (standalone, SA) 5G communication system. Alternatively, the communication system may be a public land mobile network (public land mobile network, PLMN), a device-to-device (device-to-device, D2D) network, a machine to machine (machine to machine, M2M) network, or another network.

In addition, embodiments of this application are also applicable to another future-oriented communication technology, for example, 6G. Network architectures and service scenarios described in this application are intended to describe the technical solutions in this application more clearly, and do not constitute a limitation on the technical solutions provided in this application. A person of ordinary skill in the art may know that, with evolution of the network architectures and emergence of new service scenarios, the technical solutions provided in this application are also applicable to similar technical problems.

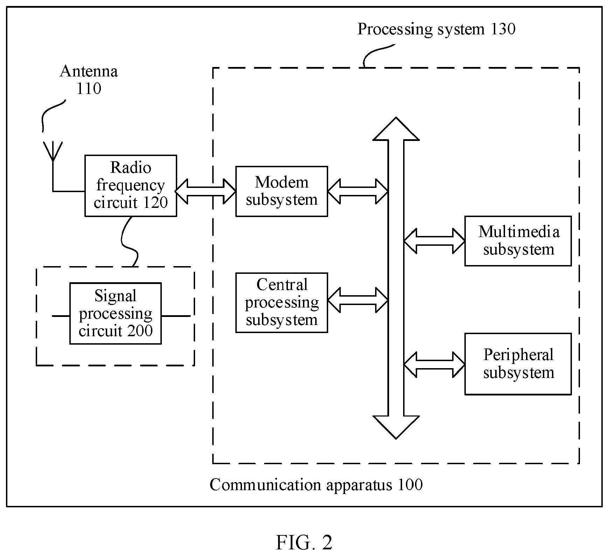

Moreover, a communication apparatus provided in this application is described. The signal processing circuit provided in embodiments of this application is deployed in a communication apparatus 100. The communication apparatus 100 may be the network device described in FIG. 1b, or may be the terminal device described in FIG. 1b. This is not limited herein. Specifically, FIG. 2 is a schematic diagram of a structure of the communication apparatus according to an embodiment of this application. The communication apparatus 100 includes an antenna 110, a radio frequency circuit 120, and a processing system 130.

In a receiving direction, the radio frequency circuit 120 receives, through the antenna 110, information sent by another communication apparatus (for example, a network device or a terminal device). After being processed by a signal processing circuit 200 in the radio frequency circuit 120, the information sent by the another communication apparatus (for example, the network device or the terminal device) is sent to the processing system 130 for processing.

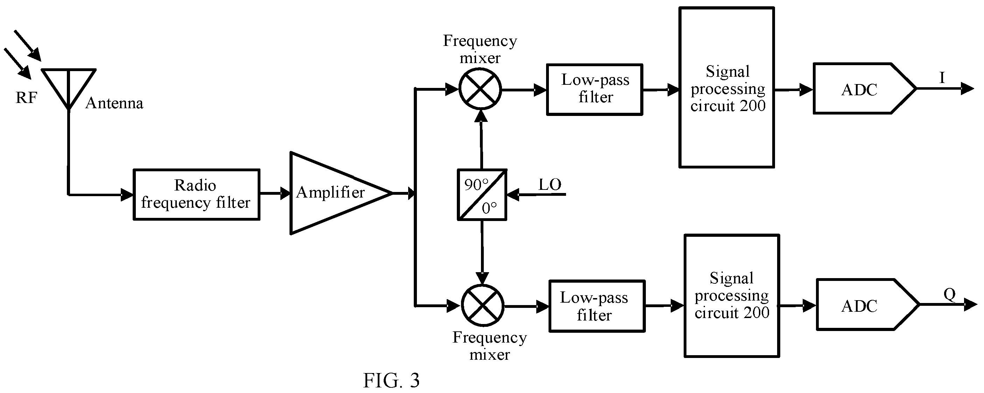

For example, FIG. 3 is a schematic diagram of a structure of a radio frequency receiving circuit according to an embodiment of this application. The radio frequency receiving circuit includes the signal processing circuit 200, a down-conversion circuit (for example, a frequency mixer shown in FIG. 3), an analog-to-digital converter (analog-to-digital converter, ADC), and an antenna. The antenna is configured to receive a radio frequency signal. The down-conversion circuit is configured to perform down-conversion processing on the radio frequency signal, to generate a baseband signal or an intermediate frequency signal. The signal processing circuit is configured to fold the baseband signal or the intermediate frequency signal, to generate a folded signal. The analog-to-digital converter is configured to quantize the folded signal, to obtain a digital signal. Before passing through the analog-to-digital converter ADC, a down-converted baseband signal or intermediate frequency signal may be first processed by the signal processing circuit. The ADC processes the folded signal. In this way, a performance requirement for the ADC can be greatly lowered.

In a transmitting direction, the processing system 130 processes information of the communication apparatus 100, and sends processed information to the radio frequency circuit 120. In the radio frequency circuit 120, the signal processing circuit 200 processes the information of the communication apparatus 100, and then sends processed information to another communication apparatus (for example, a network device or a terminal device) through the antenna 110.

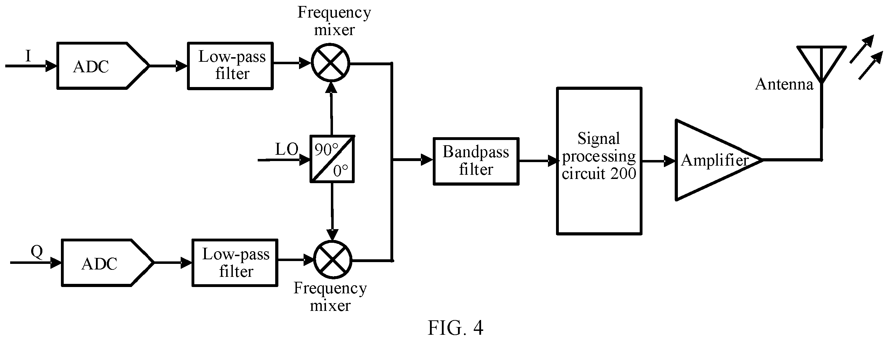

For example, FIG. 4 is a schematic diagram of a structure of a radio frequency transmitting circuit according to an embodiment of this application. The radio frequency transmitting circuit includes the signal processing circuit 200, an up-conversion circuit (for example, a frequency mixer shown in FIG. 4), an amplifier, and an antenna. The up-conversion circuit is configured to output a modulation signal. The signal processing circuit is configured to fold the modulation signal, to generate a folded signal. The amplifier is configured to amplify the folded signal, to generate a transmission signal. The antenna is configured to send the transmission signal. The signal processing circuit may fold, into a folded signal within a specific amplitude range, a modulation signal that has a high peak-to-average power ratio PAPR. The amplifier processes the folded signal, so that the amplifier can always work in an efficient state.

The processing system 130 may include a modem subsystem, configured to process data at each communication protocol layer; may further include a central processing subsystem, configured to implement processing for an operating system and an application layer; and may further include another subsystem, for example, a multimedia subsystem or a peripheral subsystem. The multimedia subsystem is configured to control a terminal camera, screen display, and the like. The peripheral subsystem is configured to connect another device. The modem subsystem may be a separately disposed chip.

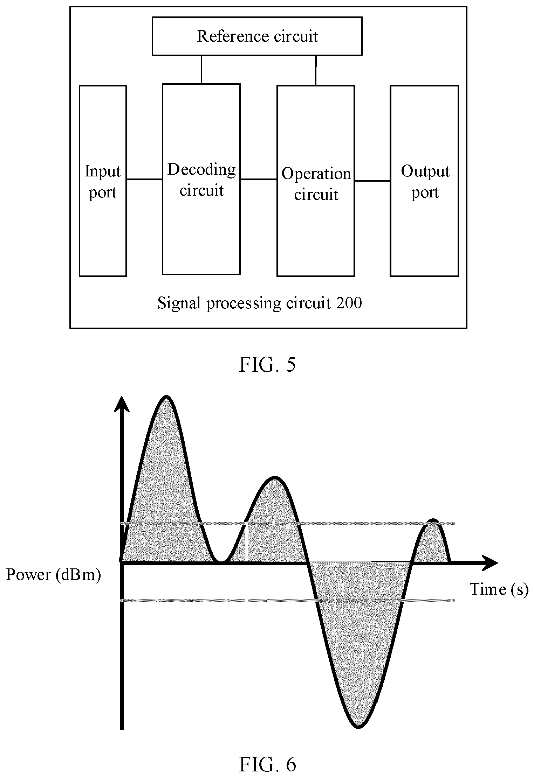

The following describes the signal processing circuit provided in embodiments of this application with reference to accompanying drawings. Specifically, FIG. 5 is a schematic diagram of an embodiment of the signal processing circuit according to an embodiment of this application. The signal processing circuit 200 includes an input port, a reference circuit, a decoding circuit, an operation circuit, and an output port.

The input port is configured to receive an input signal, where the input signal is an analog signal.

The reference circuit is configured to generate a plurality of reference voltages, where level values of the plurality of reference voltages are different. For example, the level values of the plurality of reference voltages are in an arithmetic progression relationship.

The decoding circuit is configured to output a first control level based on the plurality of reference voltages and the input signal, where the first control level is used to control the operation circuit.

Specifically, the decoding circuit determines, based on the plurality of reference voltages and the input signal, a signal interval to which the input signal belongs. A lower limit of the signal interval to which the input signal belongs is a first reference voltage. An upper limit of the signal interval to which the input signal belongs is a second reference voltage. The first reference voltage is one reference voltage of the plurality of reference voltages. The second reference voltage is another reference voltage of the plurality of reference voltages.

In another possible implementation, the input signal is greater than the first reference voltage and less than the second reference voltage.

The operation circuit is configured to generate an output signal based on the first control level, the first reference voltage, and the input signal.

In a possible implementation, the output signal may be obtained by subtracting the first reference voltage from the input signal and adding a benchmark reference voltage to an obtained difference.

In another possible implementation, the output signal may be obtained by subtracting the benchmark reference voltage from the first reference voltage to obtain a difference, and then subtracting the difference from the input signal.

The output port is configured to send the output signal.

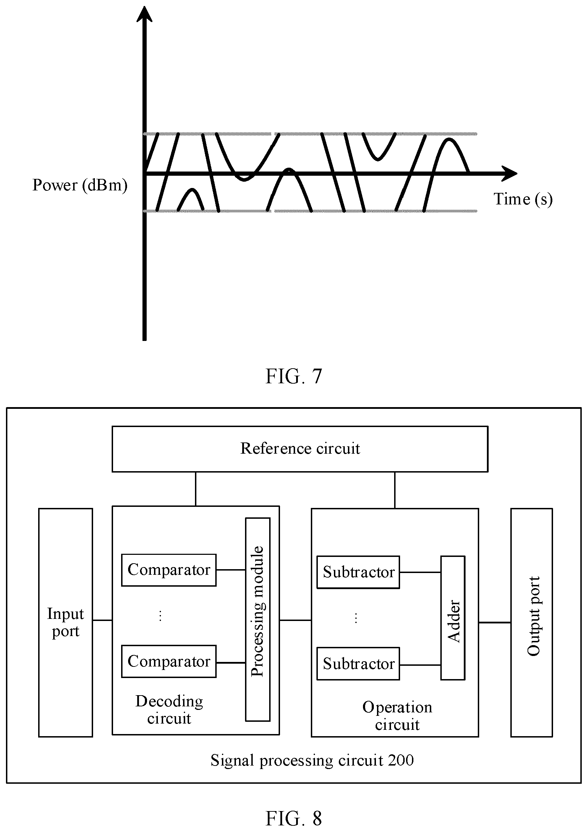

In this embodiment of this application, the input signal is processed by using the signal processing circuit. When the input signal features in a high peak-to-average power ratio, for example, FIG. 6 is a schematic diagram of the input signal according to an embodiment of this application. The signal processing circuit may fold the input signal to a specific range, and generate the output signal, for example, FIG. 7 is a schematic diagram of the output signal according to an embodiment of this application. According to processing of the signal processing circuit provided in this embodiment of this application, an impact of circuit nonlinearity is reduced, so that transmission performance of the entire circuit is improved. Because the signal processing circuit directly implements signal folding in an analog domain, a requirement for the ADC can be greatly lowered, and the amplifier is enabled to work in an efficient region.

Based on the signal processing circuit 200 shown in FIG. 5, in a possible implementation, for a possible structure of the signal processing circuit 200, refer to FIG. 8. FIG. 8 is a schematic diagram of an embodiment of a signal processing circuit according to an embodiment of this application. The signal processing circuit 200 specifically includes an input port, a reference circuit, a decoding circuit, an operation circuit, and an output port.

The decoding circuit includes n parallel comparators, where n is a positive integer greater than 1, and the n comparators are connected to the reference circuit and receive n reference voltages output by the reference circuit and the input signal.

In an optional implementation, in the n comparators, when the input signal is greater than reference voltages received by k comparators in the n comparators, the k comparators output first levels, and the remaining n-k comparators output second levels, where the first levels are different from the second levels, and k is a positive integer less than or equal to n.

The decoding circuit is configured to output the first control level based on the k first levels and the n-k second levels that are output by the n comparators.

Optionally, the decoding circuit outputs one first control level and n-1 second control levels based on the first levels and the second levels, where the first control level is different from the second control levels. Specifically, a processing module in the decoding circuit outputs the one first control level and the n-1 second control levels based on the first levels and the second levels.

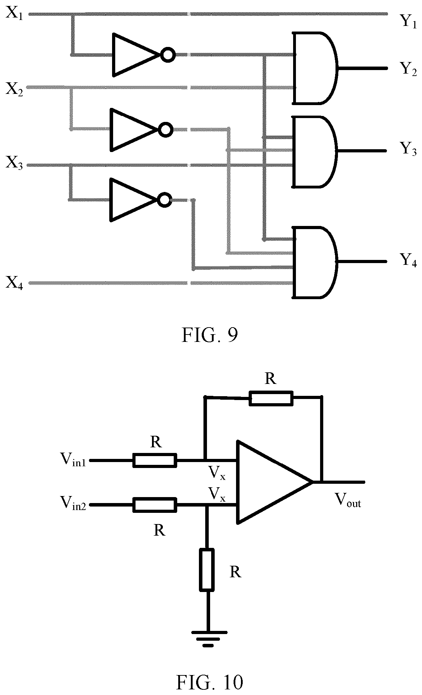

Specifically, a possible implementation of the processing module is shown in FIG. 9. FIG. 9 is a schematic diagram of a structure of the processing module according to an embodiment of this application. The processing module is implemented by using circuits of a NOT gate and a multi-input AND gate.

A NOT gate (NOT gate) is also referred to as a NOT circuit, an inverter, a phase inverter, or a logic negative circuit, and is a basic unit of a logic circuit. The NOT gate has one input end and one output end. When the input end is of a high level (logic 1), the output end is of a low level (logic 0). When the input end is of a low level, the output end is of a high level. In other words, level states of the input end and the output end are always reverse. A logic function of the NOT gate is equivalent to NOT in the logic algebra, and a circuit function thereof is equivalent to phase reversal. This operation is also called a NOT operation.

An AND gate (AND gate) is also called an "AND circuit", a logical "product", or a logical "AND" circuit, is a basic logic gate circuit that performs an AND operation, and has a plurality of input ends and one output end. The output end is of a high level only when all the input ends are of a high level (logic 1). Otherwise, the output end is of a low level (logic 0).

The decoding circuit has the following feature: A signal interval (also referred to as an amplitude range) to which an input signal Vin belongs is determined according to an output level of the decoding circuit. If the input signal Vin is greater than a reference voltage V1, an output port Y1 of the decoding circuit is of a high level, and all other output ports are of low levels. Similarly, if the input signal is not only less than a reference voltage Vn-1 but also greater than a reference voltage Vn, an output port Yn of the decoding circuit is of a high level, and all the other output ports are of low levels. Therefore, a voltage amplitude range of a signal at a particular moment can be learned. The decoding circuit can be designed according to a logical feature of ports, for example, as shown in Table 1:

**Table 1**

| Input | | | | Output | | | |
|---|---|---|---|---|---|---|---|
| X1 | X2 | X3 | X4 | Y1 | Y2 | Y3 | Y4 |
| 1 | 1 | 1 | 1 | 1 | 0 | 0 | 0 |
| 0 | 1 | 1 | 1 | 0 | 1 | 0 | 0 |
| 0 | 0 | 1 | 1 | 0 | 0 | 1 | 0 |
| 0 | 0 | 0 | 1 | 0 | 0 | 0 | 1 |

Table 1 is a truth table of input levels and output levels of the decoding circuit. For example, there are four input levels and four output levels, 1 denotes a high level, and 0 denotes a low level, that is, a port of the decoding circuit may be of a high level or a low level, which is not limited herein.

For ease of description, in this embodiment of this application, the first level is a high level, and the second level is a low level relative to the first level. The first control level is a high level, and the second control level is a low level relative to the first control level.

In another optional implementation, the first level is a low level, and the second level is a high level relative to the first level. The first control level is a low level, and the second control level is a high level relative to the first control level.

In still another optional implementation, the first level is a low level, and the second level is a high level relative to the first level. The first control level is a high level, and the second control level is a low level relative to the first control level. This is not limited herein.

In yet another optional implementation, the first level is a high level, and the second level is a low level relative to the first level. The first control level is a low level, and the second control level is a high level relative to the first control level. This is not limited herein.

The operation circuit further includes n parallel subtractor groups. Each subtractor group includes at least one subtractor. The n subtractor groups are connected to the reference circuit and receive the n reference voltages output by the reference circuit and the input signal. The reference voltages received by the n subtractors are in a one-to-one correspondence with the reference voltages received by the n comparators.

For example, the subtractor may be implemented by using a subtractor circuit. The subtractor circuit is configured to subtract a corresponding reference voltage from the input signal. Specifically, the subtractor circuit may be a differential amplification circuit. In a complementary metal-oxide-semiconductor (complementary metal-oxide-semiconductor, CMOS) circuit, the subtraction operation of signals is very easy to implement. FIG. 10 is a possible schematic diagram of a subtractor circuit according to an embodiment of this application.

In an optional implementation, each subtractor group includes one first subtractor.

The operation circuit further includes n switches. The n switches are respectively connected to n first subtractors in the n subtractor groups.

Specifically, when each subtractor group includes one first subtractor, the n subtractors are configured to receive n reference voltages. The first subtractor is further configured to receive the input signal. The first subtractor is further configured to perform a subtraction operation between the input signal and the received reference voltage. The first subtractor corresponding to the first comparator performs a subtraction operation between the input signal and the first reference voltage, where the reference voltage received by the first subtractor is the first reference voltage.

The n switches are configured to receive the one first control level and the n-1 second control levels that are output by the decoding circuit. The switches are further configured to close based on the first control level or open based on the second control levels. A first switch is closed when receiving the first control level. An output result of the subtractor connected to the first switch is output to an adder via the first switch. The output result of the first subtractor is a difference between the input signal and the first reference voltage.

In another optional implementation, each subtractor group includes one second subtractor and one third subtractor; and the second subtractor is connected to the third subtractor. Optionally, the second subtractor and the third subtractor may use a same type of subtractors; or the second subtractor and the third subtractor may use different types of subtractors. This is not limited herein. In the n subtractor groups, the n second subtractors are connected to the reference circuit; and the reference voltages received by the n second subtractors are in a one-to-one correspondence with the reference voltages received by the n comparators. The operation circuit further includes n switches, where the n switches are respectively connected to the n third subtractors, and the third subtractors are connected to the adder through the switches.

Specifically, the n second subtractors are configured to sequentially receive the n reference voltages. Each second subtractor is configured to receive the benchmark reference voltage. The second subtractor is further configured to perform a subtraction operation between the received reference voltage and the benchmark reference voltage, to generate a first intermediate signal. The third subtractor is configured to receive the first intermediate signal. The third subtractor is further configured to receive the input signal. The third subtractor is further configured to perform a subtraction operation between the input signal and the first intermediate signal, to generate a second intermediate signal.

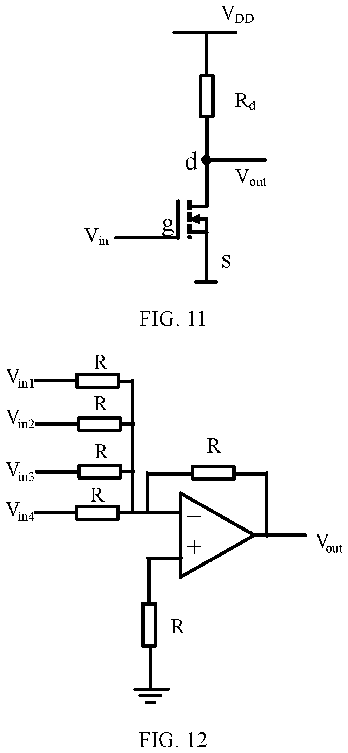

The switch in this embodiment of this application may be implemented by using a switch circuit. For example, FIG. 11 is a possible schematic diagram of a switch circuit according to an embodiment of this application. The switch circuit controls, based on an output of the decoding circuit, the switch to be turned on or off. In other words, the switch is turned on (or referred to as closed) due to a corresponding high level, and the switch is turned off (or referred to as opened) due to a corresponding low level, to determine a flow direction of the input signal. FIG. 11 is a possible implementation of a switch circuit in a CMOS circuit. In an actual design, a switch with higher performance and a higher speed may be used for implementation, which is not limited herein.

The operation circuit further includes an adder. The adder is connected to the n switches. The adder is connected to each of the subtractor groups through the switches.

The adder in this embodiment of this application may be implemented by using an adder circuit. For example, FIG. 12 is a possible schematic diagram of an adder circuit according to an embodiment of this application. It should be noted that the adder in embodiments of this application includes but is not limited to a full adder (full adder), a ripple-carry adder (ripple-carry adder), a carry-lookahead adder (carry-lookahead adder), a carry-skip adder (carry-skip adder), a carry-select adder (carry-select adder), or a serial adder (serial adder).

In an optional implementation, the adder is configured to receive a difference that is between the input signal and the first reference voltage that is output by the first subtractor. The adder is further configured to receive the benchmark reference voltage output by the reference circuit. The adder is further configured to perform an addition operation between the benchmark reference voltage and the difference between the input signal and the first reference voltage, to generate the output signal.

In another optional implementation, the adder is connected to the n third subtractors. The adder is configured to receive the second intermediate signal. The adder is further configured to generate the output signal based on the second intermediate signal.

The reference circuit includes n resistors. The n resistors are connected in series. n is a positive integer greater than 1. One of the reference voltages is output after each resistor. The input signal belongs to an interval of the plurality of reference voltages.

In an optional implementation, resistance values of the n resistors are equal.

In another optional implementation, resistance values of the n resistors are unequal. For example, the resistance values of the n resistors are arranged in an arithmetic progression, for example, 1 ohm, 2 ohm, 3 ohm, ..., 5 ohm, 6 ohm, and the like. Optionally, the resistance values of the n resistors are adjustable.

In a CMOS process, the resistor in this embodiment of this application may be implemented by using a polycrystalline silicon strip; and the resistance value of the resistor can be controlled precisely by controlling a length-width ratio of the polycrystalline silicon strip. In addition, the resistor may alternatively be implemented by using a metal-oxide semiconductor (metal-oxide semiconductor, MOS) transistor; and a required resistance value is implemented by controlling potentials of three ports of the MOS transistor.

It should be noted that "connection" in embodiments of this application may be a direct connection or an indirect connection. The "connection" may also be replaced with "coupling". This is not limited herein.

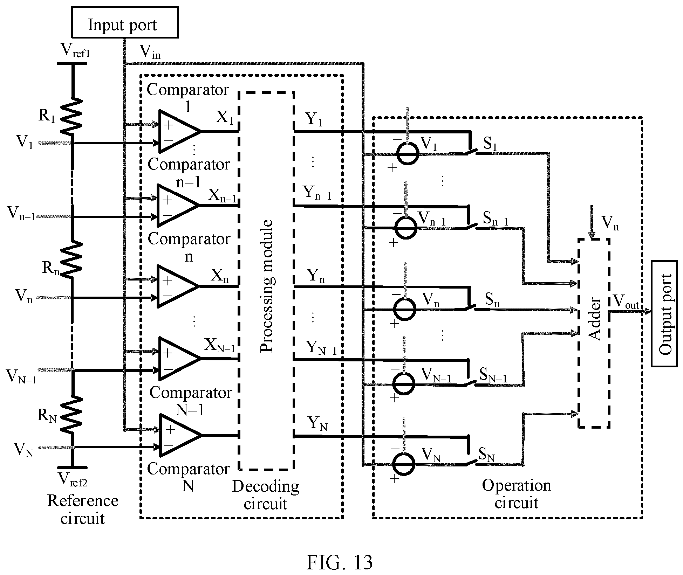

Based on the foregoing embodiments, the following describes the signal processing circuit provided in embodiments of this application with reference to a schematic diagram of a circuit. For example, FIG. 13 is a schematic diagram of a signal processing circuit according to an embodiment of this application. The signal processing circuit specifically includes an input port, a reference circuit, a decoding circuit, an operation circuit, and an output port.

The input port receives an input signal Vin.

The reference circuit includes N resistors that are connected in series. Resistance values of the N resistors are equal. N is a positive integer, and N is greater than n. Voltage values at two ends of the N resistors are Vrefl and Vref2, respectively. A resistance value of each resistor is Rn. Optionally, each reference voltage may be adjusted by adjusting Vref1, Vref2, and/or Rn.

The decoding circuit includes N comparators and a processing module. For example, levels output by the comparator 1 to the comparator N are X1 to XN, respectively. The processing module outputs levels Y1 or YN based on the input levels X1 to XN. The levels Y1 to YN are used to control switches S1 to SN, respectively. The level Y1 is used to control the switch S1. The level Yn-1 is used to control the switch Sn-1. The level YN is used to control the switch SN. The levels X1 to XN are the first level or the second level. The levels Y1 to YN are the first control level or the second control level.

The operation circuit includes N subtractor groups. Each subtractor may include one subtractor or two subtractors. For specific descriptions, refer to subsequent embodiments. Details are not distinguished herein.

The operation circuit further includes N switches and an adder.

Specifically, the N comparators are connected in parallel; the N subtractor groups are connected in parallel; and the N switches are connected in parallel. The N comparators are connected to the processing module. The processing module is connected to the N subtractor groups. Each subtractor group is connected to the adder by using one switch.

The input port is separately connected to the N comparators. The input port is separately connected to the N subtractors. The input port separately transmits output signals to the N comparators and the N subtractors.

The reference circuit is separately connected to the N comparators. The reference circuit is separately connected to the N subtractors. The reference circuit separately transmits reference voltages to the N comparators and the N subtractors. The reference circuit is further connected to the adder. The reference circuit transmits the benchmark reference voltage to the adder.

Optionally, voltage values at two ends of the reference circuit are Vrefl and Vref2, respectively. Value ranges of Vrefl and Vref2 may be as follows: Vrefl is equal to a maximum value of the input signal, and Vref2 is equal to a minimum value of the input signal, that is, Vref1=max(Vin) and Vref2=min(Vin).

In the decoding circuit, if the input signal Vin is greater than V1, it indicates that the signal is between V1 and VREF1. In this case, an output port Y1 of the decoding circuit is of a high level, and the other output ports thereof are of low levels. If the signal is not only less than Vn-1 but also greater than Vn, an output port Yn is of a high level, and the other output ports are of low levels. Therefore, at a same moment, only one port of the decoding circuit outputs a high level, and all of the other ports output low levels.

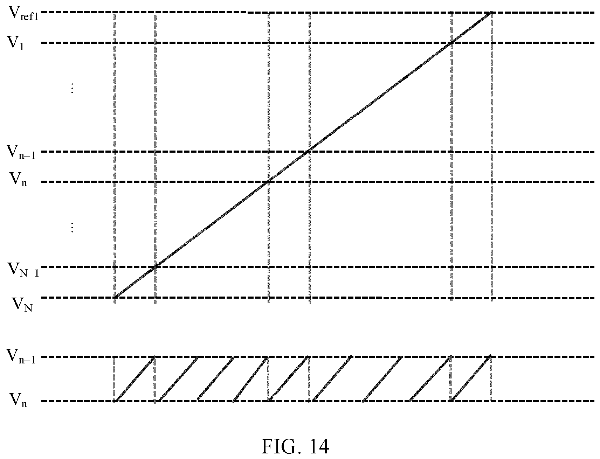

The output level of the decoding circuit controls a switch inside the operation circuit, to select a flow path of the input signal Vin. If only the output port Y1 is of a high level, that is, the signal is between V1 and Vref1, the switch S1 is closed, and all of the other switches are opened. The input signal Vin enters the subtractor to participate in a subtraction operation with the voltage V1. Then, an obtained signal flows through the switch S1 and enters the adder. Similarly, if the output port Yn is of a high level, that is, the signal is between Vn and Vn-1, namely, within an amplitude range of the output signal, the switch Sn is closed, and all of the other switches are opened. The input signal Vin enters the subtractor to participate in a subtraction operation with the voltage Vn. Then, an obtained signal flows through the switch Sn and enters the adder. Finally, the adder outputs a finally required signal based on outputs of all the switches and the reference voltage Vn. The output signal output by the adder is shown in FIG. 14 is a schematic diagram of comparison between an input signal and an output signal according to an embodiment of this application. An upper part of FIG. 14 shows a waveform of the input signal. A lower part of FIG. 14 shows a waveform of the output signal. It can be learned that after being processed by the signal processing circuit, the input signal is folded to a signal within an interval between Vn and Vn-1.

In this embodiment of this application, the signal processing circuit uses a parallel architecture, that is, the decoding circuit includes n comparators. The operation circuit includes n subtractors and n switches. A plurality of parallel branches (each comparator, a corresponding subtractor, and a corresponding switch are considered as one branch) can work at the same time, which greatly improves the running speed and efficiency of the circuit.

In this embodiment of this application, subtractor groups include two implementation solutions: 1. One subtractor group includes one subtractor (a first subtractor). 2. One subtractor group includes two subtractors (a second subtractor and a third subtractor). The following provides separate descriptions with reference to accompanying drawings.
(1) One subtractor group includes one subtractor (a first subtractor).

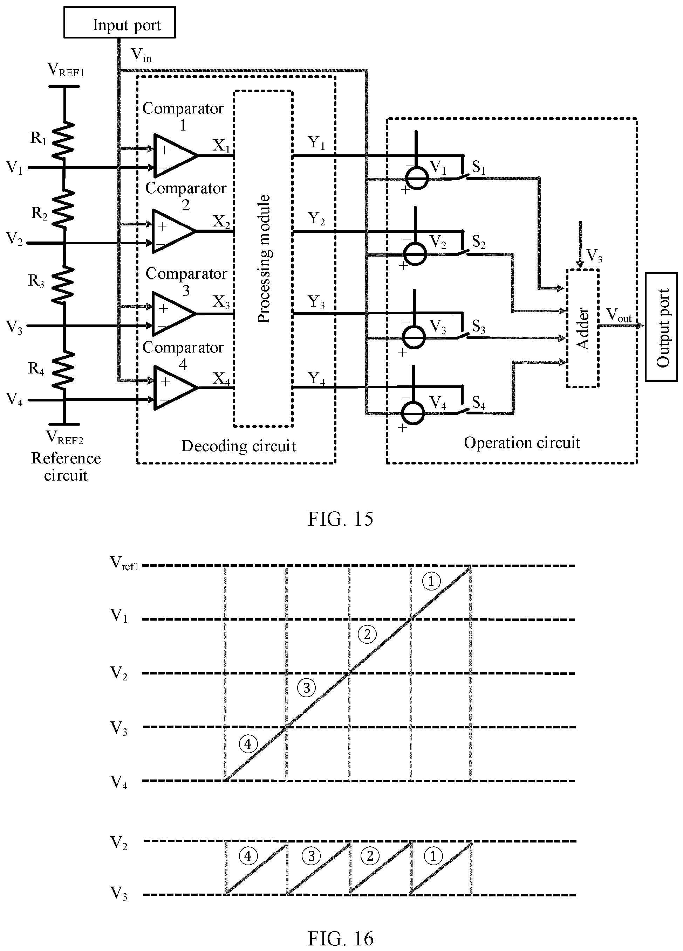

FIG. 15 is a schematic diagram of a circuit structure of a signal processing circuit according to an embodiment of this application. For example, an order in the signal processing circuit is 4, that is, the signal processing circuit includes four parallel comparators, four parallel subtractor groups (each subtractor group includes one subtractor), and four parallel switches. Specifically, a reference circuit includes four resistors; a comparator circuit includes four comparators; and a decoding circuit includes four comparators and a processing module. Specifically, as shown in FIG. 9, the processing module includes three NOT gates, one two-input AND gate, one three-input AND gate, and one four-input AND gate. An operation circuit includes four switches, four subtractors, and one five-input adder.

A reference voltage is determined as follows: Vrefl is set to a maximum value max(Vin) of the input signal Vin, and V4=Vref2 is set to a minimum value min(Vin) of the input signal Vin. Herein, the four resistors have a same resistance value; and four reference voltage values V1 to V4 are obtained according to a voltage division theorem of a series circuit. Level values of the four reference voltages are in an arithmetic progression. Optionally, amplitude ranges of the voltage values (namely, Vrefl and Vref2) at two ends of the reference circuit may also be set to be larger than a range of the input signal Vin; and an external fixed bias voltage is used.

Assuming that V3 is a benchmark reference voltage, a processing procedure in the decoding circuit is specifically as follows:
In the comparator 1 to the comparator 4, the input signal Vin is compared with V1, V2, V3, and V4, respectively. A signal interval to which the input signal belongs, namely, a voltage range of the input signal, is determined according to an output level of the decoding circuit.

Specifically, if Vin is greater than V1, all output levels of the comparator are high levels, that is, X1=X2=X3=X4=1. Y1=1 is obtained by using the processing module shown in FIG. 9. The other levels are low levels. In this case, it may be determined that the input signal Vin is greater than V1. In this case, the switch S1 in the operation circuit is closed, and all of the other switches are opened. After participating in a subtraction operation in a subtractor with the voltage V1, the input signal Vin flows through the switch S1, and an obtained signal is fed into the five-input adder, as shown by a line segment (1) in FIG. 16. FIG. 16 is another schematic diagram of comparison between an input signal and an output signal according to an embodiment of this application. An upper part of FIG. 16 is the input signal; and a lower part of FIG. 16 is the output signal.

If Vin is not only greater than V2 but also less than V1, output levels of the comparator are X1=0 and X2=X3=X4=1. Y2=1 is obtained by using the processing module shown in FIG. 9. The other levels are low levels. In this case, it may be determined that the input signal Vin is not only greater than V2 but also less than V1. In this case, the switch S2 in the operation circuit is closed, and all of the other switches are opened. After participating in a subtraction operation in a subtractor with the voltage V2, the input signal Vin flows through the switch S2, and an obtained signal is fed into the five-input adder, as shown by a line segment (2) in FIG. 16.

If Vin is not only greater than V3 but also less than V2, output levels of the comparator are X1=X2=0 and X3=X4=1. Y3=1 is obtained by using the processing module shown in FIG. 9. The other levels are low levels. In this case, it may be determined that the input signal Vin is not only greater than V3 but also less than V2. In this case, the switch S3 in the operation circuit is closed, and all of the other switches are opened. After participating in a subtraction operation in a subtractor with the voltage V3, the input signal Vin flows through the switch S3, and an obtained signal is fed into the five-input adder, as shown by a line segment (3) in FIG. 16.

If Vin is not only greater than V4 but also less than V3, output levels of the comparator are X1=X2=X3=0 and X4=1. Y4=1 is obtained by using the processing module shown in FIG. 9. The other levels are low levels. In this case, it may be determined that the input signal Vin is not only greater than V4 but also less than V3. In this case, the switch S4 in the operation circuit is closed, and all of the other switches are opened. After participating in a subtraction operation in a subtractor with the voltage V4, the input signal Vin flows through the switch S4, and an obtained signal is fed into the five-input adder, as shown by a line segment (4) in FIG. 16.

A fifth input port of the five-input adder is of a reference voltage V3. The adder finally outputs an output signal.

(2) One subtractor group includes two subtractors (a third subtractor and a second subtractor).

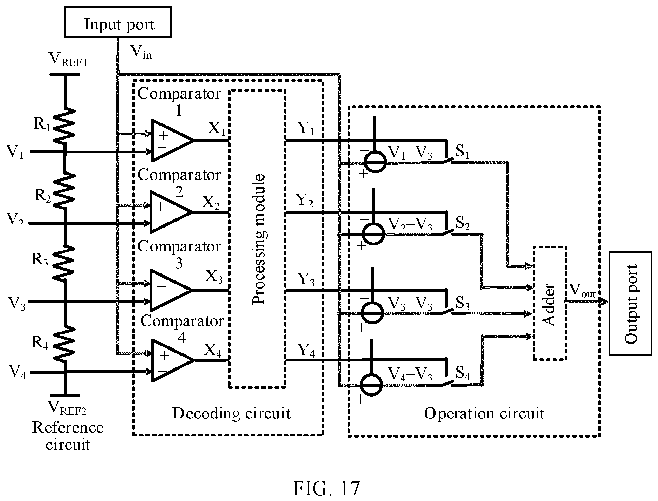

FIG. 17 is a schematic diagram of another circuit structure of a signal processing circuit according to an embodiment of this application. For example, an order in the signal processing circuit is 4, that is, the signal processing circuit includes four parallel comparators, four parallel subtractor groups (each subtractor group includes two subtractors, and FIG. 17 shows only one of the subtractors), and four parallel switches. Specifically, a reference circuit includes four resistors; a comparator circuit includes four comparators; and a decoding circuit includes four comparators and a processing module. Specifically, as shown in FIG. 9, the processing module includes three NOT gates, one two-input AND gate, one three-input AND gate, and one four-input AND gate. An operation circuit includes four switches, eight subtractors, and one four-input adder.

Assuming that V3 is a benchmark reference voltage, a processing procedure in the decoding circuit is specifically as follows:
Specifically, if the input signal Vin is greater than V1, the switch S1 in the operation circuit is closed, and all of the other switches are opened. After participating in a subtraction operation in the third subtractor with a level (V1-V3) (the level (V1-V3) is obtained via processing by the second subtractor, and the second subtractor is not shown in FIG. 17), the input signal Vin flows through the switch S1, and an obtained signal enters the four-input adder.

If the input signal Vin is not only greater than V2 but also less than V1, the switch S2 in the operation circuit is closed, and all of the other switches are opened. After participating in a subtraction operation in the third subtractor with a level (V2-V3) (the level (V2-V3) is obtained via processing by the second subtractor, and the second subtractor is not shown in FIG. 17), the input signal Vin flows through the switch S2, and an obtained signal enters the four-input adder.

If the input signal Vin is not only greater than V3 but also less than V2, the switch S3 in the operation circuit is closed, and all of the other switches are opened. After participating in a subtraction operation in the third subtractor with a level (V3-V3) (the level (V3-V3=0) is obtained via processing by the second subtractor, and the second subtractor is not shown in FIG. 17), the input signal Vin flows through the switch S3, and an obtained signal enters the four-input adder.

Optionally, an input signal that is not only greater than V3 but also less than V2 may be directly output by using the adder.

If the input signal Vin is not only greater than V4 but also less than V3, the switch S4 in the operation circuit is closed, and all of the other switches are opened. After participating in a subtraction operation in the third subtractor with a level (V4-V3) (the level (V4-V3) is obtained via processing by the second subtractor, and the second subtractor is not shown in FIG. 17), the input signal Vin flows through the switch S4, and an obtained signal enters the four-input adder.

It should be understood that "one embodiment" or "an embodiment" mentioned in the entire specification means that specific features, structures, or characteristics related to the embodiment are included in at least one embodiment of this application. Therefore, "in one embodiment" or "in an embodiment" appearing throughout this specification does not necessarily refer to a same embodiment. In addition, these specific features, structures, or characteristics may be combined in one or more embodiments in any appropriate manner. It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A radio frequency transmitting circuit, wherein the radio frequency transmitting circuit comprises a signal processing circuit (200), an up-conversion circuit, an amplifier, and an antenna (110);
the up-conversion circuit is configured to output a modulation signal;
the signal processing circuit (200) is configured to fold the modulation signal, to generate a folded signal;
the amplifier is configured to amplify the folded signal, to generate a transmission signal;
the antenna (110) is configured to send the transmission signal; and
the signal processing circuit (200) comprises:
an input port receiving the modulation signal, a reference circuit, a decoding circuit, an operation circuit, and an output port connected to the amplifier, wherein both the modulation signal of the input port and an output signal of the output port are analog signals;
the reference circuit being configured to generate a plurality of reference voltages;
the decoding circuit being configured to output a first control level based on the plurality of reference voltages and the modulation signal, the first control level being output to the operation circuit; and
the operation circuit being configured to generate the output signal based on the first control level, the output signal being equal to the modulation signal minus a first reference voltage plus a benchmark reference voltage, the plurality of reference voltages comprising the first reference voltage and the benchmark reference voltage, and the first reference voltage being not greater than the modulation signal.

2. The radio frequency transmitting circuit according to claim 1, wherein
the decoding circuit comprises n parallel comparators, wherein n is a positive integer greater than 1, and the n comparators are connected to the reference circuit and receive n reference voltages output by the reference circuit and the modulation signal;
in the n comparators, when the modulation signal is greater than reference voltages received by k comparators in the n comparators, the k comparators output first levels, and the remaining n-k comparators output second levels, wherein the first levels are different from the second levels, and k is a positive integer less than or equal to n; and
the decoding circuit is configured to output the first control level based on the k first levels and the n-k second levels that are output by the n comparators.

3. The radio frequency transmitting circuit according to claim 2, wherein
the decoding circuit outputs one first control level and n-1 second control levels based on the first levels and the second levels, wherein the first control level is different from the second control levels.

4. The radio frequency transmitting circuit according to either of claims 2 and 3, wherein the operation circuit further comprises n parallel subtractor groups, each subtractor group comprises at least one subtractor, the n subtractor groups are connected to the reference circuit and receive the n reference voltages output by the reference circuit and the modulation signal, and the reference voltages received by the n subtractors are in a one-to-one correspondence with the reference voltages received by the n comparators.

5. The radio frequency transmitting circuit according to claim 4, wherein
each subtractor group comprises one first subtractor; and
the operation circuit further comprises n switches, wherein the n switches are respectively connected to n first subtractors in the n subtractor groups.

6. The radio frequency transmitting circuit according to claim 4, wherein each subtractor group comprises one second subtractor and one third subtractor, and the second subtractor is connected to the third subtractor;
in the n subtractor groups, the n second subtractors are connected to the reference circuit, and reference voltages received by the n second subtractors are in a one-to-one correspondence with the reference voltages received by the n comparators; and
the operation circuit further comprises n switches, wherein the n switches are respectively connected to the n third subtractors, and the third subtractors are connected to an adder through the switches.

7. The radio frequency transmitting circuit according to either of claims 5 and 6, wherein
the operation circuit further comprises the adder, wherein the adder is connected to the n switches, and the adder is connected to the subtractor groups through the switches.

8. The radio frequency transmitting circuit according to any one of claims 1 to 7, wherein
the reference circuit comprises n resistors, the n resistors are connected in series, and n is a positive integer greater than 1;
one of the reference voltages is output after each resistor; and
the modulation signal belongs to an interval of the plurality of reference voltages,
wherein a lower limit of the signal interval to which the modulation signal belongs is a first reference voltage, an upper limit of the signal interval to which the modulation signal belongs is a second reference voltage, the first reference voltage is one reference voltage of the plurality of reference voltages, and the second reference voltage is another reference voltage of the plurality of reference voltages.

9. The radio frequency transmitting circuit according to claim 8, wherein resistance values of the n resistors are equal.

10. The radio frequency transmitting circuit according to claim 8, wherein resistance values of at least two of the n resistors are unequal.

11. A radio frequency receiving circuit, wherein the radio frequency receiving circuit comprises a signal processing circuit (200), a down-conversion circuit, an analog-to-digital converter, and an antenna (110);
the antenna (110) is configured to receive a radio frequency signal;
the down-conversion circuit is configured to perform down-conversion processing on the radio frequency signal, to generate a modulation signal;
the signal processing circuit (200) is configured to fold the modulation signal, to generate a folded signal; and
the analog-to-digital converter is configured to quantize the folded signal, to obtain a digital signal.
wherein the signal processing circuit (200) comprises:
an input port receiving the modulation signal, a reference circuit, a decoding circuit, an operation circuit, and an output port connected to the analog-to-digital converter, wherein both the modulation signal of the input port and an output signal of the output port are analog signals;
the reference circuit being configured to generate a plurality of reference voltages;
the decoding circuit being configured to output a first control level based on the plurality of reference voltages and the modulation signal, the first control level being output to the operation circuit; and
the operation circuit being configured to generate the output signal based on the first control level, the output signal being equal to the modulation signal minus a first reference voltage plus a benchmark reference voltage, the plurality of reference voltages comprising the first reference voltage and the benchmark reference voltage, and the first reference voltage being not greater than the modulation signal.

12. A communication apparatus (100) comprising the radio frequency transmitting circuit according to claim 1 and/or the radio frequency receiving circuit according to claim 11.

13. A communication system comprising the communication apparatus (100) according to claim 12.

## Patentansprüche

1. Funkfrequenz-Übertragungsschaltung, wobei die Funkfrequenz-Übertragungsschaltung eine Signalverarbeitungsschaltung (200), eine Aufwärtsumwandlungsschaltung, einen Verstärker und eine Antenne (110) umfasst; die Aufwärtsumwandlungsschaltung konfiguriert ist, ein Modulationssignal auszugeben,
die Signalverarbeitungsschaltung (200) konfiguriert ist, das Modulationssignal zu falten, um ein gefaltetes Signal zu erzeugen;
der Verstärker konfiguriert ist, das gefaltete Signal zu verstärken, um ein Übertragungssignal zu erzeugen;
die Antenne (110) konfiguriert ist, das Übertragungssignal zu senden; und
die Signalverarbeitungsschaltung (200) Folgendes umfasst:
einen Eingangsanschluss, der das Modulationssignal empfängt, eine Referenzschaltung, eine Decodierungsschaltung, eine Betriebsschaltung und einen Ausgangsanschluss, der mit dem Verstärker verbunden ist, wobei sowohl das Modulationssignal des Eingangsanschlusses als auch ein Ausgangssignal des Ausgangsanschlusses analoge Signale sind;
die Referenzschaltung konfiguriert ist, eine Vielzahl von Referenzspannungen zu erzeugen;
die Decodierungsschaltung konfiguriert ist, einen ersten Steuerpegel basierend auf der Vielzahl von Referenzspannungen und dem Modulationssignal auszugeben, wobei der erste Steuerpegel an die Betriebsschaltung ausgegeben wird; und
die Betriebsschaltung konfiguriert ist, das Ausgangssignal basierend auf dem ersten Steuerpegel zu erzeugen, wobei das Ausgangssignal gleich dem Modulationssignal minus einer ersten Referenzspannung plus einer Bezugspunkt-Referenzspannung ist, wobei die Vielzahl von Referenzspannungen die erste Referenzspannung und die Bezugspunkt-Referenzspannung umfasst und die erste Referenzspannung nicht größer als das Modulationssignal ist.

2. Funkfrequenz-Übertragungsschaltung nach Anspruch 1, wobei
die Decodierungsschaltung n parallele Komparatoren umfasst, wobei n eine positive ganze Zahl größer als 1 ist, und die n Komparatoren mit der Referenzschaltung verbunden sind und durch die Referenzschaltung ausgegebene n Referenzspannungen und das Modulationssignal empfangen;
in den n Komparatoren, wenn das Modulationssignal größer als von k Komparatoren in den n Komparatoren empfangene Referenzspannungen ist, die k Komparatoren erste Pegel ausgeben und die verbleibenden n-k Komparatoren zweite Pegel ausgeben, wobei die ersten Pegel von den zweiten Pegeln verschieden sind und k eine positive ganze Zahl kleiner als oder gleich n ist; und
die Decodierungsschaltung konfiguriert ist, den ersten Steuerpegel basierend auf den k ersten Pegeln und den n-k zweiten Pegeln, die von den n Komparatoren ausgegeben werden, auszugeben.

3. Funkfrequenz-Übertragungsschaltung nach Anspruch 2, wobei
die Decodierungsschaltung einen ersten Steuerpegel und n-1 zweite Steuerpegel basierend auf den ersten Pegeln und den zweiten Pegeln ausgibt, wobei der erste Steuerpegel von den zweiten Steuerpegeln verschieden ist.

4. Funkfrequenz-Übertragungsschaltung nach einem der Ansprüche 2 und 3, wobei die Betriebsschaltung ferner n parallele Subtrahierergruppen umfasst, jede Subtrahierergruppe mindestens einen Subtrahierer umfasst, die n Subtrahierergruppen mit der Referenzschaltung verbunden sind und die durch die Referenzschaltung ausgegebenen n Referenzspannungen und das Modulationssignal empfangen und die von den n Subtrahierern empfangenen Referenzspannungen in einer Eins-zu-eins-Korrespondenz mit den von den n Komparatoren empfangenen Referenzspannungen sind.

5. Funkfrequenz-Übertragungsschaltung nach Anspruch 4, wobei
jede Subtrahierergruppe einen ersten Subtrahierer umfasst; und
die Betriebsschaltung ferner n Schalter umfasst, wobei die n Schalter jeweils mit n ersten Subtrahierern in den n Subtrahierergruppen verbunden sind.

6. Funkfrequenz-Übertragungsschaltung nach Anspruch 4, wobei jede Subtrahierergruppe einen zweiten Subtrahierer und einen dritten Subtrahierer umfasst und der zweite Subtrahierer mit dem dritten Subtrahierer verbunden ist;
in den n Subtrahierergruppen die n zweiten Subtrahierer mit der Referenzschaltung verbunden sind und von den n zweiten Subtrahierern empfangene Referenzspannungen in einer Eins-zu-eins-Korrespondenz mit den von den n Komparatoren empfangenen Referenzspannungen sind; und
die Betriebsschaltung ferner n Schalter umfasst, wobei die n Schalter jeweils mit den n dritten Subtrahierern verbunden sind und die dritten Subtrahierer mit einem Addierer durch die Schalter verbunden sind.

7. Funkfrequenz-Übertragungsschaltung nach einem der Ansprüche 5 und 6, wobei
die Betriebsschaltung ferner den Addierer umfasst, wobei der Addierer mit den n Schaltern verbunden ist und der Addierer mit den Subtrahierergruppen durch die Schalter verbunden ist.

8. Funkfrequenz-Übertragungsschaltung nach einem der Ansprüche 1 bis 7, wobei
die Referenzschaltung n Widerstände umfasst, die n Widerstände in Reihe verbunden sind und n eine positive ganze Zahl größer als 1 ist;
eine der Referenzspannungen nach jedem Widerstand ausgegeben wird; und
das Modulationssignal zu einem Intervall der Vielzahl von Referenzspannungen gehört,
wobei eine untere Grenze des Signalintervalls, zu dem das Modulationssignal gehört, eine erste Referenzspannung ist, eine obere Grenze des Signalintervalls, zu dem das Modulationssignal gehört, eine zweite Referenzspannung ist, die erste Referenzspannung eine Referenzspannung der Vielzahl von Referenzspannungen ist und die zweite Referenzspannung eine andere Referenzspannung der Vielzahl von Referenzspannungen ist.

9. Funkfrequenz-Übertragungsschaltung nach Anspruch 8, wobei Widerstandswerte der n Widerstände gleich sind.

10. Funkfrequenz-Übertragungsschaltung nach Anspruch 8, wobei Widerstandswerte von mindestens zwei der n Widerstände ungleich sind.

11. Funkfrequenz-Empfangsschaltung, wobei die Funkfrequenz-Empfangsschaltung eine Signalverarbeitungsschaltung (200), eine Abwärtsumwandlungsschaltung, einen Analog-zu-Digital-Wandler und eine Antenne (110) umfasst;
die Antenne (110) konfiguriert ist, ein Funkfrequenzsignal zu empfangen;
die Abwärtsumwandlungsschaltung konfiguriert ist, Abwärtsumwandlungsverarbeitung an dem Funkfrequenzsignal durchzuführen, um ein Modulationssignal zu erzeugen;
die Signalverarbeitungsschaltung (200) konfiguriert ist, das Modulationssignal zu falten, um ein gefaltetes Signal zu erzeugen; und
der Analog-zu-Digital-Wandler konfiguriert ist, das gefaltete Signal zu quantisieren, um ein digitales Signal zu erlangen,
wobei die Signalverarbeitungsschaltung (200) Folgendes umfasst:
einen Eingangsanschluss, der das Modulationssignal empfängt, eine Referenzschaltung, eine Decodierungsschaltung, eine Betriebsschaltung und einen Ausgangsanschluss, der mit dem Analog-zu-Digital-Wandler verbunden ist, wobei sowohl das Modulationssignal des Eingangsanschlusses als auch ein Ausgangssignal des Ausgangsanschlusses analoge Signale sind;
die Referenzschaltung konfiguriert ist, eine Vielzahl von Referenzspannungen zu erzeugen;
die Decodierungsschaltung konfiguriert ist, einen ersten Steuerpegel basierend auf der Vielzahl von Referenzspannungen und dem Modulationssignal auszugeben, wobei der erste Steuerpegel an die Betriebsschaltung ausgegeben wird; und
die Betriebsschaltung konfiguriert ist, das Ausgangssignal basierend auf dem ersten Steuerpegel zu erzeugen, wobei das Ausgangssignal gleich dem Modulationssignal minus einer ersten Referenzspannung plus einer Bezugspunkt-Referenzspannung ist, die Vielzahl von Referenzspannungen die erste Referenzspannung und die Bezugspunkt-Referenzspannung umfasst und die erste Referenzspannung nicht größer als das Modulationssignal ist.

12. Kommunikationsvorrichtung (100), umfassend die Funkfrequenz-Übertragungsschaltung nach Anspruch 1 und/oder die Funkfrequenz-Empfangsschaltung nach Anspruch 11.

13. Kommunikationssystem, umfassend die Kommunikationsvorrichtung (100) nach Anspruch 12.

## Revendications

1. Circuit émetteur à radiofréquence, le circuit émetteur à radiofréquence comprenant un circuit de traitement de signal (200), un circuit de conversion élévateur, un amplificateur, et une antenne (110) ;
le circuit de conversion élévateur étant configuré de façon à fournir un signal de modulation ;
le circuit de traitement de signal (200) étant configuré de façon à replier le signal de modulation, afin de générer un signal replié ;
l'amplificateur étant configuré de façon à amplifier le signal replié, afin de générer un signal d'émission ;
l'antenne (110) étant configurée de façon à envoyer le signal d'émission ; et
le circuit de traitement de signal (200) comprenant :
un port d'entrée recevant le signal de modulation, un circuit de référence, un circuit de décodage, un circuit d'opération, et un port de sortie connecté à l'amplificateur, le signal de modulation du port d'entrée et un signal de sortie du port de sortie étant tous les deux des signaux analogiques ;
le circuit de référence étant configuré de façon à générer une pluralité de tensions de référence ;
le circuit de décodage étant configuré de façon à fournir un premier niveau de contrôle en se basant sur la pluralité de tensions de référence et sur le signal de modulation, le premier niveau de contrôle étant fourni au circuit d'opération ; et
le circuit d'opération étant configuré de façon à générer le signal de sortie en se basant sur le premier niveau de contrôle, le signal de sortie étant égal au signal de modulation moins une première tension de référence plus une tension de référence de repère, la pluralité de tensions de référence comprenant la première tension de référence et la tension de référence de repère, et la première tension de référence n'étant pas plus grande que le signal de modulation.

2. Circuit émetteur à radiofréquence selon la revendication 1, dans lequel
le circuit de décodage comprend n comparateurs parallèles, n étant un nombre entier positif plus grand que 1, et les n comparateurs étant connectés au circuit de référence et recevant n tensions de référence fournies par le circuit de référence et le signal de modulation ;
dans les n comparateurs, lorsque le signal de modulation est plus grand que les tensions de référence reçues par k comparateurs parmi les n comparateurs, les k comparateurs fournissent des premiers niveaux, et les n - k comparateurs restants fournissent des deuxièmes niveaux, les premiers niveaux étant différents des deuxièmes niveaux et k étant un nombre entier positif plus petit que, ou égal à n ; et dans lequel
le circuit de décodage est configuré de façon à fournir le premier niveau de contrôle en se basant sur les k premiers niveaux et sur les n - k deuxièmes niveaux qui sont fournis par les n comparateurs.

3. Circuit émetteur à radiofréquence selon la revendication 2, dans lequel
le circuit de décodage fournit un premier niveau de contrôle et n - 1 deuxièmes niveaux de contrôle en se basant sur sur les premiers niveaux et sur les deuxièmes niveaux, le premier niveau de contrôle étant différent des deuxièmes niveaux de contrôle.

4. Circuit émetteur à radiofréquence selon soit la revendication 2, soit la revendication 3, dans lequel le circuit d'opération comprend en outre n groupes de soustracteurs parallèles, chaque groupe de soustracteurs parallèles comprenant au moins un soustracteur, les n groupes de soustracteurs étant connectés au circuit de référence et recevant les n tensions de référence fournies par le circuit de référence et le signal de modulation, et les tensions de référence reçues par les n soustracteurs étant dans une correspondance biunivoque avec les tensions de référence reçues par les n comparateurs.

5. Circuit émetteur à radiofréquence selon la revendication 4, dans lequel
chaque groupe de soustracteurs comprend un premier soustracteur, et
le circuit d'opération comprend en outre n commutateurs, les n commutateurs étant connectés respectivement à n premiers soustracteurs dans les n groupes de soustracteurs.

6. Circuit émetteur à radiofréquence selon la revendication 4, dans lequel chaque groupe de soustracteurs comprend un deuxième soustracteur et un troisième soustracteur, et le deuxième soustracteur est connecté au troisième soustracteur ;
dans les n groupes de soustracteurs, les n deuxièmes soustracteurs sont connectés au circuit de référence, et les tensions de référence reçues par les n deuxièmes soustracteurs sont dans une correspondance biunivoque avec les tensions de référence reçues par les n comparateurs ; et
le circuit d'opération comprend en outre n commutateurs, les n commutateurs étant connectés respectivement aux n troisièmes soustracteurs, et les troisièmes soustracteurs étant connectés à un additionneur au moyen des commutateurs.

7. Circuit émetteur à radiofréquence selon soit la revendication 5, soit la revendication 6, dans lequel
le circuit d'opération comprend en outre l'additionneur, l'additionneur étant connecté aux n commutateurs, et l'additionneur étant connecté aux groupes de soustracteurs au moyen des commutateurs.

8. Circuit émetteur à radiofréquence selon l'une quelconque des revendications 1 à 7, dans lequel
le circuit de référence comprend n résistances, les n résistances étant connectées en série et n étant un nombre entier positif plus grand que 1 ;
une des tensions de référence est fournie après chaque résistance ; et
le signal de modulation appartient à un intervalle de la pluralité de tensions de référence,
une limite inférieure de l'intervalle de signal auquel le signal de modulation appartient est une première tension de référence, une limite supérieure de l'intervalle de signal auquel le signal de modulation appartient est une deuxième tension de référence, la première tension de référence est une tension de référence parmi la pluralité de tensions de référence, et la deuxième tension de référence est une autre tension de référence parmi la pluralité de tensions de référence.

9. Circuit émetteur à radiofréquence selon la revendication 8, dans lequel les valeurs de résistance des n résistances sont égales.

10. Circuit émetteur à radiofréquence selon la revendication 8, dans lequel les valeurs de résistance d'au moins deux des n résistances sont inégales.

11. Circuit récepteur à radiofréquence, le circuit récepteur à radiofréquence comprenant un circuit de traitement de signal (200), un circuit convertisseur abaisseur, un convertisseur analogique-numérique, et une antenne (110) ;
l'antenne (110) est configurée de façon à recevoir un signal radiofréquence ;
le circuit convertisseur abaisseur est configuré de façon à exécuter un traitement de conversion d'abaissement sur le signal radiofréquence, afin de générer un signal de modulation ;
le circuit de traitement de signal (200) est configuré de façon à replier le signal de modulation, afin de générer un signal replié ; et
le convertisseur analogique-numérique est configuré de façon à quantifier le signal replié, afin d'obtenir un signal numérique ;
le circuit de traitement de signal (200) comprenant :
un port d'entrée recevant le signal de modulation, un circuit de référence, un circuit de décodage, un circuit d'opération, et un port de sortie connecté au convertisseur analogique-numérique, le signal de modulation du port d'entrée et un signal de sortie du port de sortie étant tous les deux des signaux analogiques ;
le circuit de référence étant configuré de façon à générer une pluralité de tensions de référence ;
le circuit de décodage étant configuré de façon à fournir un premier niveau de contrôle en se basant sur la pluralité de tensions de référence et sur le signal de modulation, le premier niveau de contrôle étant fourni au circuit d'opération ; et
le circuit d'opération étant configuré de façon à générer le signal de sortie en se basant sur le premier niveau de contrôle, le signal de sortie étant égal au signal de modulation moins une première tension de référence plus une tension de référence de repère, la pluralité de tensions de référence comprenant la première tension de référence et la tension de référence de repère, et la première tension de référence n'étant pas plus grande que le signal de modulation.

12. Appareil de communication (100) comprenant le circuit émetteur à radiofréquence selon la revendication 1 et/ou le circuit récepteur à radiofréquence selon la revendication 11.

13. Système de communication comprenant l'appareil de communication (100) selon la revendication 12.
